# EUROPEAN PATENT APPLICATION

(11) **EP 4 835 826 A1**
(43) Date of publication of application: **04.11.2026**
(21) Application number: 24915553.2
(22) Date of filing: 09.12.2024
(51) Int. Cl.: G06T 11/60, G06T 7/11, G06T 7/155, G06T 5/60, G06T 7/50, G06F 3/0484, G06N 3/0475

(54) **ELECTRONIC DEVICE AND IMAGE GENERATION METHOD USING ARTIFICIAL INTELLIGENCE MODEL IN ELECTRONIC DEVICE**

(30) Priority: 03.01.2024 KR 20240001213; 10.06.2024 KR 20240075156
(71) Applicant: Samsung Electronics Co., Ltd., Suwon-si, Gyeonggi-do 16677 (KR)
(72) Inventor: HUR, Youngjin, Suwon-si, Gyeonggi-do 16677 (KR); MOON, Chankyoo, Suwon-si, Gyeonggi-do 16677 (KR); JEONG, Moonhwan, Suwon-si, Gyeonggi-do 16677 (KR)
(74) Representative: Gulde & Partner
(86) International application number: PCT/KR2024/020066
(87) International publication number: WO 2025/146971

(57) **Abstract**

An electronic device according to an embodiment may comprise: a display; at least one processor including a processing circuit; and a memory including one or more storage media for storing instructions, wherein the instructions, when executed individually or collectively by the at least one processor, cause the electronic device to: display a first image on the display via a user interface; crop a portion of the first image, which corresponds to an object, via the user interface; move the cropped portion from a first position to a second position on the basis of the first image so as to acquire a second image; on the basis of the first position of the cropped portion and the second position of the cropped portion, acquire mask information indicating at least one area in the second image, which is to be modified via inpainting; apply the second image and the mask information to an AI model of the electronic device; acquire a third image generated on the basis of the second image and the mask information by the AI model; and display the third image on the display. Other embodiments may be possible.

## Description

### [Technical Field]

The disclosure relates to an electronic device and a method of generating an image by using an artificial intelligence model in an electronic device, according to an embodiment.

### [Background Art]

Thanks to the remarkable development of information and communication technologies and semiconductor technologies, the distribution and use of various electronic devices have rapidly increased. Electronic devices are being developed to allow users to carry them and perform communication. An electronic device may refer to a device capable of performing a specific function according to a built-in program, such as a mobile communication terminal, a tablet PC, a video/audio device, a desktop/laptop computer, or a vehicle navigation system. Such an electronic device may display an image through a display and may include a function of editing an image to generate a new image. For example, such an electronic device may delete or move some objects in an image, and may store the image in which the objects are deleted or moved as a new image.

The above-described information may be provided as related art for the purpose of assisting in understanding the disclosure. It is not claimed or decided whether any of the above-described contents may be applied as prior art relating to the disclosure.

### [Detailed Description of the Invention]

### [Technical Problem]

When an electronic device crops and moves an object in an image, a new image may be generated by placing the object in an area to which the movement is made and generating an image associated with a background of the object in an area where the object existed so as to be combined therewith.

When the object in the image is cropped and moved, the object may appear unnatural within the image. For example, when the object has an incomplete shape in which only a part of the object exists due to the boundary of the image, and the object with the incomplete shape is moved to another area, the object with the incomplete shame may appear unnatural in the other area. In addition, when the object is occluded by another object and the object with an incomplete shape, excluding the part occluded by the other object, is moved to another area, the object with the incomplete shape may be shown unnatural in the other area.

According to an embodiment, there may be provided an electronic device and an image generation method using an artificial intelligence (AI) model in the electronic device, wherein, when an object is moved in a first image, the electronic device generates a second image by generating an incomplete part of the object using an artificial intelligence (AI) model so that the moved object is shown natural in the image, and combining the generated part with the first image.

### [Technical Solution]

An electronic device according to an embodiment of the disclosure may include at least one processor including a display and processing circuitry, and memory including one or more storage media for storing instructions. The instructions, when executed by the at least one processor individually or collectively, may cause the electronic device to display a first image through a user interface on the display. The instructions, when executed by the at least one processor individually or collectively, may cause the electronic device to obtain a second image by cropping a portion of the first image corresponding to an object and moving the cropped portion from a first position to a second position with reference to the first image through the user interface. The instructions, when executed by the at least one processor individually or collectively, may cause the electronic device to obtain mask information indicating at least one area of the second image to be modified via inpainting, based on a first position of the cropped portion and a second position of the cropped portion. The instructions, when executed by the at least one processor individually or collectively, may cause the electronic device to apply the second image and the mask information to an AI model. The instructions, when executed by the at least one processor individually or collectively, may cause the electronic device to obtain a third image generated by the AI model, based on the second image and the mask information. The instructions, when executed by the at least one processor individually or collectively, may cause the electronic device to display the third image on the display.

An image generation method using an artificial intelligence model of an electronic device according to an embodiment of the disclosure may include an operation of displaying a first image through a user interface on a display. The method may include an operation of obtaining a second image by cropping a portion of the first image corresponding to an object and moving the cropped portion from a first position to a second position with respect to the first image through the user interface. The method may include an operation of obtaining mask information indicating at least one area of the second image to be modified via inpainting, based on the first position of the cropped portion and the second position of the cropped portion. The method may include an operation of applying the second image and the mask information to an AI model. The method may include an operation of obtaining a third image based on the second image and the mask information by the AI model. The method may include an operation of displaying the third image on the display.

According to an embodiment of the disclosure, a non-transitory storage medium stores instructions, and the instructions, when executed by an electronic device, may cause the electronic device to perform at least one operation, including: an operation of displaying a first image through a user interface on a display; an operation of obtaining a second image by cropping a portion of the first image corresponding to an object and moving the cropped portion from a first position to a second position with respect to the first image through the user interface; an operation of obtaining mask information indicating at least one area of the second image to be modified via inpainting, based on the first position of the cropped portion and the second position of the cropped portion; an operation of applying the second image and the mask information to an AI model; an operation of obtaining a third image generated by the AI model based on the second image and the mask information; and an operation of displaying the third image on the display.

### [Brief Description of Drawings]

FIG. 1 is a block diagram illustrating an electronic device in a network environment according to an embodiment.
FIG. 2 is a block diagram schematically illustrating an electronic device according to an embodiment.
FIG. 3 is a flowchart illustrating an image generation operation using an AI model according to an embodiment.
FIG. 4A is a diagram illustrating an example of screens in which an object in a first area of a first image is moved to another area according to an embodiment.
FIG. 4B is a diagram illustrating an example of screens where a second image, in which an object in a first area of a first image is moved to another area, is obtained according to an embodiment.
FIG. 4C is a diagram illustrating a case of identifying a second area in a second image so that a moved object represents a shape of a subject that matches a background different from a previous background according to an embodiment.
FIG. 4D is a diagram illustrating an example of obtaining a third image by transferring a second image and mask information obtained based on a first area and a second area, to an AI model according to an embodiment.
FIG. 4E is a diagram illustrating an example of transferring a second image and mask information obtained based on a first area and a second area to an AI model, obtaining an image corresponding to the mask information, and combining the image corresponding to the mask information with the second image so as to obtain a third image, according to an embodiment.
FIG. 4F is a diagram illustrating a second image and mask information, which are obtained when an object in a first area is copied to another area and the object in the first area is erased by using an AI eraser according to an embodiment.
FIG. 4G is a diagram illustrating an example of obtaining a third image by transferring a second image and mask information, which are obtained using an AI eraser, to an AI model, according to an embodiment.
FIG. 5 is a diagram illustrating an example of determining, as a second area in a second image, an area between an edge which an object was in contact with in a first image and an area to which movement is made, if the object was in contact with the edge before being moved, according to an embodiment.
FIG. 6 is a diagram illustrating an example of determining a second area in a second image when the second image is generated in a manner that an object is reduced in a state in which the object is in contact with an edge in a first image before being moved, and moved to another area according to an embodiment.
FIG. 7A is a diagram illustrating an example of screens when an object in a first area of a first image is selected and moved to another area by a user according to an embodiment.
FIG. 7B is a diagram illustrating an example of screens in which a second area is determined by a user by using an area interface according to an embodiment.
FIG. 7C is a diagram illustrating a screen in which an image corresponding to a first area and an image corresponding to a second area determined by a user are generated and combined with a second image, according to an embodiment.
FIG. 8A is a diagram illustrating an example of determining a second area in a second image according to a user input by using an area interface including an object, when the object is selected and moved in a first image, according to an embodiment.
FIG. 8B is a diagram illustrating an example of determining a second area in a second image, based on a missing area and a partially expanded area in a state in which an area interface including an object is partially expanded, according to an embodiment.

### [Mode for Carrying out the Invention]

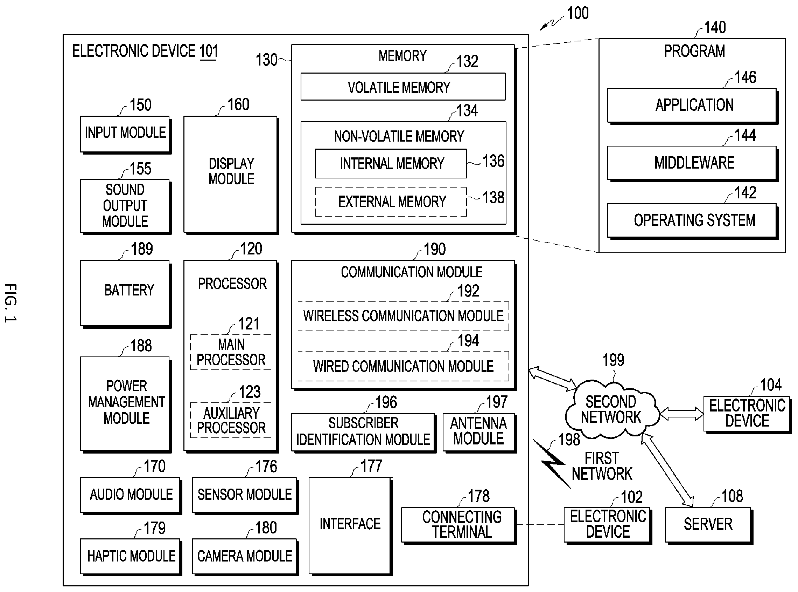

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, descriptions of configurations that are the same as or similar to those in the preceding embodiments will be omitted or will use the same reference numerals, and detailed descriptions thereof may also be omitted for clarity. An electronic device according to an embodiment of the disclosure may be implemented by selectively combining configurations of various embodiments, and a configuration of one embodiment may be substituted by a configuration of another embodiment. For example, it should be noted that the disclosure is not limited to specific drawings or embodiments.

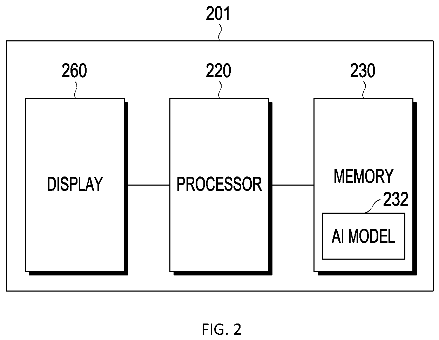

FIG. 2 is a block diagram illustrating an electronic device according to an embodiment.

Referring to FIG. 2, an electronic device 201 (e.g., the electronic device 101 of FIG. 1) according to an embodiment may include at least one processor 220 (hereinafter, also referred to as the processor 220), memory 230, and a display 260. The electronic device 201 according to an embodiment may not be limited thereto, and may be configured to further include various components or exclude some of the above components. The electronic device 201 according to an embodiment may further include all or some of the components of the electronic device 101 illustrated in FIG. 1.

The processor 220 (e.g., the processor 120 of FIG. 1) according to an embodiment may include some or all of a central processing unit (CPU), an application processor (AP), a neural processing unit (NPU), a data processing unit (DPU), and a graphics processing unit (GPU), and may include a hardware structure (e.g., an AI chip) specialized for processing an artificial intelligence (AI) model. The processor 220 according to an embodiment may perform overall control of the electronic device 201, and may perform an image generation operation using an AI model (e.g., a first AI model (e.g., an AI model 232) in the electronic device and/or a second AI model outside the electronic device (e.g., an AI model of an external device or a server)). For example, the AI model may include a generative artificial intelligence model. For example, the electronic device 201 may perform an image generation operation using the AI model through the AP, or may detect performance of an image generation operation through the AP, then provide a command for the image generation operation to an NPU, DPU, or GPU, and cause the DPU or GPU to perform an image generation operation. According to an embodiment, the processor 220 may use the first AI model 232 and/or the second AI model, and the first AI model 232 may be an on-device AI model, and the first AI model 232 and the second AI model may have the same or different throughput capacities, qualities, and/or training volumes.

The processor 220 according to an embodiment may display an image (e.g., an original image or a first image, hereinafter also referred to as a "first image") on the display 260.

The processor 220 according to an embodiment may display the first image on the display 260 through a user interface (user interface) according to an embodiment. According to an embodiment, the processor 220 may perform an image generation operation using the AI model when the first image is edited by a user based on the user interface.

The processor 220 according to an embodiment may obtain a second image by cropping a portion of the first image corresponding to an object and moving the cropped portion from a first position to a second position with respect to the first image. For example, the processor 220 may crop (or segment from a background (segmentation)) the portion including the object (or an image of a subject) in the first position of the first image (e.g., a photo), and may move the cropped portion to the second position, thereby obtaining the second image. The movement of the cropped portion according to an embodiment may include a change in the position of the cropped portion via reduction or enlargement of the cropped portion.

The processor 220 according to an embodiment may obtain mask information indicating at least one area (or portion) of the second image to be changed (e.g., to be modified via inpainting), based on the first position of the cropped portion and the second position of the cropped portion. The mask information according to an embodiment may include a mask image and/or binary information indicating an area designated to be inpainted and an area not designated to be inpainted in an image (e.g., the second image). The mask information according to an embodiment may include a mask image and/or binary information that represents an area, designated to be inpainted in the second image, in white (e.g., a pixel value of 1) and an area, not designated to be inpainted, in black (e.g., a pixel value of 0).

According to an embodiment, the processor 220 may identify at least one area to be modified via inpainting in the second image, based on the movement of the cropped portion from the first position to the second position (e.g., an analysis result of the object corresponding to the cropped portion or a user input regarding the cropped portion), and may obtain mask information indicating the identified at least one area. For example, inpainting may be redrawing or filling an image partially or entirely.

According to an embodiment, the at least one area may include a first area and a second area. According to an embodiment, the processor 220 may identify the first area corresponding to an empty space in the first position based on the movement of the cropped portion. According to an embodiment, the processor 220 may identify the second area designated between the first position and the second position to modify (in a complete shape) the object corresponding to the cropped portion based on the movement of the cropped portion.

According to an embodiment, when the first position of the cropped portion contacts an edge of the first image and the cropped portion is moved from the first position to the second position, the processor 220 may designate the second area between the edge and the second position in order to modify the object corresponding to the cropped portion by filling a part of the shape of the object corresponding to the cropped portion.

The processor 220 according to an embodiment may apply the second image and the mask information to the first AI model (e.g., the AI model 232) of the electronic device 201 or the second AI model of an external device.

According to an embodiment, when the second image and mask information are applied to the AI model 232 of the electronic device 201, the processor 220 may execute the AI model 232 stored in the memory 230, input the second image and mask information to the executed AI model 232, and obtain a third image generated by inpainting at least one area of the second image using the AI model 232, based on the second image and the mask information.

When applying the second image and the mask information to the second AI model of the external device, the processor 220 according to an embodiment may transmit the second image and the mask information to the second AI model of the external device by using communication circuitry (not illustrated) included in the electronic device 201, and may receive the third image generated by inpainting of at least one area of the second image using the second AI model, based on the second image and the mask information.

According to an embodiment, the object may include an image of a subject belonging to any one of subject categories of a structure, a thing, a person, an animal, and/or a plant, and may also include an image of a subject belonging to another designated subject category. The processor 220 according to an embodiment may segment a portion (e.g., the object) (e.g., a portion in the first area) of the first image and a background area (or crop a portion of the first image) (segmentation) by using an outline of the portion (e.g., the object) of the first image selected, based on a selection and movement input (e.g., a touch and drag or a click and drag) for selecting and moving the portion (e.g., object (or an area of the object)) in the first position of the first image via a user's touch or an external input device (e.g., stylus, a mouse, or other input devices). The processor 220 according to an embodiment may move the segmented (or cropped) portion from the first position to the second position, which is different from the first position, and may obtain the second image in which the segmented (or cropped) portion is moved to the second position. For example, as the portion (e.g., the object) in the first position of the first image is moved to the second position, the second image may include an empty space in the first position, and include the cropped portion in the second position having a different background from the first position.

According to an embodiment, when the cropped portion in the first position of the first image is moved from the first position to the second position, which is different from the first position, the moved portion may be placed in a background different from the original background (in the first position) and thus may appear unnatural. According to an embodiment, the cropped portion of the first image may include the object corresponding to the cropped portion, and the object may be an image of a subject belonging to any one of the subject categories of a structure, a thing, a person, an animal, and/or a plant, and the image of the subject may represent a complete shape of the subject or a part of the complete shape of the subject. For example, the object corresponding to the cropped portion in the first position may be in contact with at least one edge (e.g., an edge or a side) of the first image, and displayed as a part of the complete shape of the subject (e.g., a part of the shape from the head to the toe of a person when the subject is a person (e.g., an upper body)) since the complete shape of the subject (e.g., a shape from the head to the toe of a person when the subject is a person) is cut by at least one edge. When the object representing the part of the complete shape of the subject displayed as being in contact with at least one edge is moved from the first position where it is in contact with the at least one edge to the second position where it is separated from the edge, the object representing the part of the complete shape of the subject may be displayed in the second position with the different background, as if the subject is cut out, and thus may appear unnatural. As another example, in a case in which the object corresponding to the cropped portion in the first position is displayed as a part of the complete shape (as opposed to the complete shape) of the subject because it is occluded by another object corresponding to another portion, when the portion including the object corresponding to the part of the complete shape of the subject is moved from the first position to the second position where the object is not occluded by the other object, the object corresponding to the moved portion may be displayed in a shape with loss to the extent of occlusion by the other object, in the second position with the different background, and may appear unnatural. As another example, in a case in which the object corresponding to the portion in the first position is in contact with at least one edge of the first image, and displayed as a part of the complete shape of the subject since the complete shape of the subject is cut by at least one edge, when the object representing the part of the complete shape of the subject displayed as being in contact with the at least one edge is reduced in size, and the reduced object is moved from the first position where it is in contact with the edge of the first image to the second position where it is not in contact with the edge, the reduced object may be displayed in the second position with the different background, as if the object is cut out and may thus appear unnatural.

The processor 220 according to an embodiment may identify (or select) the second area to be modified via inpainting in the second image so as to modify the object corresponding to the portion moved from the first position to the second position to have a subject shape that matches (or fits or is natural in) the background in the second position, which is different from the background in the first position.

The processor 220 according to an embodiment may analyze the object corresponding to the moved portion, and identify (or select) the second area to be modified via inpainting in the second image, based on an analysis result of the object corresponding to the moved portion.

When the second area to be modified in the second image is identified using the analysis result of the object corresponding to the moved portion, the processor 220 according to an embodiment may selectively perform one or more of the following operations 1 to 4.
1. If the cropped portion in the first image, before being moved, was in contact with at least one edge of the first image (e.g., when the cropped portion includes an edge (a boundary line) of the first image), the processor 220 according to an embodiment may identify an area (e.g., a rectangular area) between the edge that the cropped portion was in contact with and the second position to which the movement is made in the second image as the second area to be modified.
2. When the cropped portion in the first image, which is before being moved, is in contact with at least one edge of the first image (e.g., when the cropped portion includes an edge (a boundary line) of the first image), the processor 220 according to an embodiment may identify the object corresponding to the cropped portion via segmentation of the cropped portion, identify a type of subject (e.g., a subject category) that the identified object corresponds to and whether the object is in a shape including the entire subject (e.g., a complete shape) or a part (e.g., a part of a complete shape) using an object detection engine (or software or program), and then identify an area for the object to represent the complete shape of the subject in the second image as the second area modified in the second image. For example, the object detection engine may include instructions which, when executed by the processor 220, cause the electronic device 201 (or the processor 220) to detect objects from the first image, detect a subject category that each detected object belongs to, and identify the percentage of the subject that each object satisfies. For example, the object detection engine may include an object detection algorithm including regions with convolutional neural network (R-CNN) or you only look once (YOLO).
3. The processor 220 according to an embodiment may use a depth estimation algorithm to identify whether the object corresponding to the cropped portion before the movement of the cropped portion is occluded by another object in another portion that is not cropped. Depth estimation according to an embodiment may be performed by using a depth map that represents a distance value corresponding to an object per pixel in an image as a gray image. In the depth map, each pixel may have a bright value as the distance is shorter, and a dark value as the distance is longer. The depth map may be trained using a deep learning network, such as a U-Net, and the processor 220 may estimate the depth of the objects identified from the first image by using the depth estimation algorithm, and when the object corresponding to the cropped portion is occluded by another object in another portion that is not cropped, the processor 220 may estimate the complete shape of the subject corresponding to the object corresponding to the cropped portion by using the object detection engine, and may identify the second area to be modified in the second image so that the object corresponding to the cropped portion represents the complete shape of the subject.
4. When the object corresponding to the cropped portion is cut off by at least one edge of the first image or occluded by another object in another portion not cropped so that the object represents a part of the complete shape of the subject (e.g., when the complete shape of the subject is partially missing), as opposed to the complete shape of the subject, the processor 220 according to an embodiment may further identify whether the object corresponding to the cropped portion includes a character. When the object corresponding to the cropped portion is cut off by at least one edge of the first image or occluded by another object in another portion not cropped so that the object represents a part of the complete shape of the subject, as opposed to the complete shape of the subject, and includes a character, the processor 220 according to an embodiment may recognize the character, may obtain text corresponding to the character, may apply the text to a large language model (LLM) to obtain expanded text including the text, and may obtain the second area to be modified in the second image and the expanded text information so that the object represents the complete shape of the subject and includes the expanded text.

The processor 220 according to an embodiment may identify (or select) the second area to be modified in the second image, based on an area selected by a user input (or selection) in association with the object corresponding to the cropped portion after the movement of the cropped portion.

When the second area to be modified in the second image is identified based on the area selected by the user input (or selection) in association with the object corresponding to the cropped portion after the movement of the cropped portion, the processor 220 according to an embodiment may selectively perform one or more of the following operations 5 to 7.

5. The processor 220 according to an embodiment may display an area interface including the object corresponding to the cropped portion after the movement of the cropped portion, expand the area interface based on the user input, and identify an area excluding the object in the expanded area interface as the second area.

6. The processor 220 according to an embodiment may display the area interface including the object corresponding to the cropped portion after the movement of the cropped portion, estimate a missing part of the object corresponding to the cropped portion by using the depth estimation algorithm and/or the object detection engine, provide information associated with the estimated missing part, and identify, as the second area, a portion excluding the object and including the missing part in the area interface based on the user input.

7. The processor 220 according to an embodiment may display the area interface including the object corresponding to the cropped portion after the movement of the cropped portion, estimate a missing part of the object by using the depth estimation algorithm and/or the object detection engine, provide information associated with the estimated missing part, expand the area interface based on the user input, and identify a portion excluding the object and including the missing part in the expanded area interface, as the second area.

The processor 220 according to an embodiment may obtain the mask information indicating the first area and/or the second area for generating (e.g., inpainting) an image, based on the first position corresponding to the cropped portion of the first image and the second position to which the cropped portion is moved. The mask information according to an embodiment may include binary information indicating an area (e.g., the first area and/or the second area) for which an image is generated by the AI model (e.g., the first AI model or the second AI model) in the second image.

The processor 220 according to an embodiment may apply the second image and the mask information to the AI model (e.g., the first AI model or the second AI model), and may obtain a third image generated through the AI model. The processor 220 according to an embodiment may transfer (or transmit) (or input) the second image and the mask information to the AI model, generate an image corresponding to the first area and the second area, and combine the generated image with the second image to obtain the third image. The processor 220 according to an embodiment may apply the second image and the mask information to the AI model to generate an image corresponding to the first area or an image corresponding to the second area, and may combine the generated image corresponding to the first area or the generated image corresponding to the second area with the second image to obtain the third image. The processor 220 according to an embodiment may further apply, to the AI model, expanded text information together with the second image and the mask information, generate a character-inclusive image corresponding to the second area, and may combine the generated character-inclusive image with the second image to obtain the third image.

The processor 220 according to an embodiment may display the third image via the display 260.

The AI model 232 according to an embodiment may include one or more AI models, and may include a generative artificial intelligence model. For example, the generative artificial intelligence (AI) model may refer to an AI model that newly generates similar content by using content such as text, audio, and/or images. The generative artificial intelligence (AI) model may learn patterns of content and generate new content as an inference result. For example, in the image field, the generative artificial intelligence (AI) model may regenerate an image that minims a feature of a specific image. For example, the generative artificial intelligence model may include a generative adversarial network (GAN)-based image generation model or a stable diffusion-based image generation model. The stable diffusion-based image generation model may include an OpenAI-based Dall-E model, an Imagen model, a Midjourney model, or a stable diffusion model.

The memory 230 (e.g., the memory 130 of FIG. 1) according to an embodiment may include one or more storage media for storing instructions. The memory 230 according to an embodiment may store various data used by at least one component (e.g., the processor 220 and/or the display 260) of the electronic device 201. The data may include, for example, software (e.g., a software module or the program 140) and input or output data for a command associated therewith. The memory 230 according to an embodiment may store the AI model 232, and may store a program (e.g., software or the program 140 of FIG. 1) for generating an image by using the AI model 232, as well as various data generated during program execution. The memory 230 according to an embodiment may store commands (or instructions) that cause the processor 220 to perform an image generation operation (or method) using the AI model 232 of the disclosure.

The display 260 (e.g., the display 160 of FIG. 1) according to an embodiment may display various pieces of information under the control of the processor 220. The display 260 according to an embodiment may display a screen associated with performing an image generation operation (or method) using the AI model 232. According to an embodiment, the display 260 may be implemented in the form of a touch screen. When the display 260 is implemented in the form of a touch screen with an input module, the display 260 may display various pieces of information generated according to a user's touch.

According to an embodiment, the electronic device 201 may not be limited to the configuration illustrated in FIG. 2, and may be configured to further include various components. According to an embodiment, the electronic device 201 may further include an input module (not illustrated) (e.g., the input module 150 of FIG. 1) and may receive, through the input module, various inputs associated with an image generation operation (or method) using the AI model. According to an embodiment, the electronic device 201 may further include communication circuitry (not illustrated) (e.g., the communication module 190 of FIG. 1), and may collaboratively perform part of an image generation operation by communicating with an external device (e.g., an external device including the second AI model) through the communication circuitry. The communication circuit according to an embodiment may include a wired communication module (e.g., a USB communication module) and/or a wireless communication module (e.g., a cellular module, a wireless-fidelity (Wi-Fi) module, a Bluetooth module, or a near field communication (NFC) module).

In an embodiment, the main components of an electronic device have been described with reference to the electronic device 201 of FIG. 2. However, in various embodiments, not all of the components illustrated in FIG. 2 are essential, and the connection relationship of the main components of the electronic device 201 described above with reference to FIG. 2 may be changeable according to various embodiments.

An electronic device (e.g., the electronic device 101 of FIG. 1 or the electronic device 201 of FIG. 2) according to an embodiment may include a display (e.g., the display module 160 of FIG. 1 or the display 260 of FIG. 2), at least one processor 120 or 220 including processing circuitry, and memory 130 or 230 including one or more storage media for storing instructions. The instructions according to an embodiment, when executed by the at least one processor individually or collectively, may configure the electronic device to display a first image through a user interface on the display. The instructions according to an embodiment, when executed by the at least one processor individually or collectively, may cause the electronic device to obtain a second image by cropping a portion of the first image corresponding to an object and moving the cropped portion from a first position to a second position with respect to the first image through the user interface. The instructions according to an embodiment, when executed by the at least one processor individually or collectively, may cause the electronic device to obtain mask information indicating at least one area of the second image to be modified via inpainting, based on the first position of the cropped portion and the second position of the cropped portion. The instructions according to an embodiment, when executed by the at least one processor individually or collectively, may cause the electronic device to apply the second image and the mask information to an AI model. The instructions according to an embodiment, when executed by the at least one processor individually or collectively, may cause the electronic device to obtain a third image generated by the AI model, based on the second image and the mask information. The instructions according to an embodiment, when executed by the at least one processor individually or collectively, may cause the electronic device to display the third image on the display.

The at least one area according to an embodiment may include a first area and a second area.

The instructions according to an embodiment, when executed by the at least one processor individually or collectively, may cause the electronic device to identify the first area corresponding to an empty space in the first position, based on the movement of the cropped portion.

The instructions according to an embodiment, when executed by the at least one processor individually or collectively, may cause the electronic device to identify the second area designated between the first position and the second position to modify the object corresponding to the cropped portion, based on the movement of the cropped portion.

The instructions according to an embodiment, when executed by the at least one processor individually or collectively, may cause the electronic device to, when the first position of the cropped portion contacts an edge of the first image and the cropped portion is moved from the first position to the second position, designate the second area between the edge and the second position to modify the object corresponding to the cropped portion by filling a part of a shape of the object corresponding to the cropped portion.

The AI model according to an embodiment may include a first AI model stored in the memory. The instructions according to an embodiment, when executed by the at least one processor individually or collectively, may cause the electronic device to input the second image and the mask information to the first AI model, and obtain the third image generated by the first AI model by inpainting the at least one area of the second image, based on the second image and the mask information. The AI model according to an embodiment may include a second AI model of an external device. The electronic device according to an embodiment may further include communication circuitry, and the instructions, when executed by the at least one processor individually or collectively, may cause the electronic device to transmit the second image and the mask information to the second AI model of the external device via the communication circuitry, and to receive the third image generated by the second AI model by inpainting the at least one area of the second image, based on the second image and the mask information.

The instructions according to an embodiment, when executed by the at least one processor individually or collectively, may cause the electronic device to identify the object through segmentation of the cropped portion, estimate a subject represented by the object and a shape of the subject by using an object detection engine, and identify a shape of the object based on the estimated shape of the subject.

The instructions according to an embodiment, when executed by the at least one processor individually or collectively, may cause the electronic device to identify whether the object corresponding to the cropped portion in the first image is occluded by another object corresponding to another portion of the first image by using a depth estimation algorithm; when the object corresponding to the cropped portion in the first image is occluded by the other object corresponding to the other portion of the first image, identify the shape of the subject represented by the object by using the object detection engine; and estimate a missing part of the object's object, which is missed from the shape of the object, based on the shape of the subject represented by the object.

The instructions according to an embodiment, when executed by the at least one processor individually or collectively, may cause the electronic device to display, through the user interface, an area interface including the cropped portion after movement of the cropped portion, expand the area interface based on a user input, and identify the second area designated in the expanded area interface to modify the object corresponding to the cropped portion, based on the movement of the cropped portion.

The instructions according to an embodiment, when executed by the at least one processor individually or collectively, may cause the electronic device to estimate the missing part of the object's object, which is missed from the shape of the object corresponding to the cropped portion, by using the depth estimation algorithm and/or the object detection engine, after the movement of the cropped portion, and provide information associated with the estimated missing part of the shape of the object.

The mask information according to an embodiment may include binary information indicating the at least one area to be inpainted by the first AI model or the second AI model in the second image.

According to an embodiment, the first AI model or the second AI model may include a generative adversarial network (GAN)-based image generation model or a stable diffusion-based image generation model.

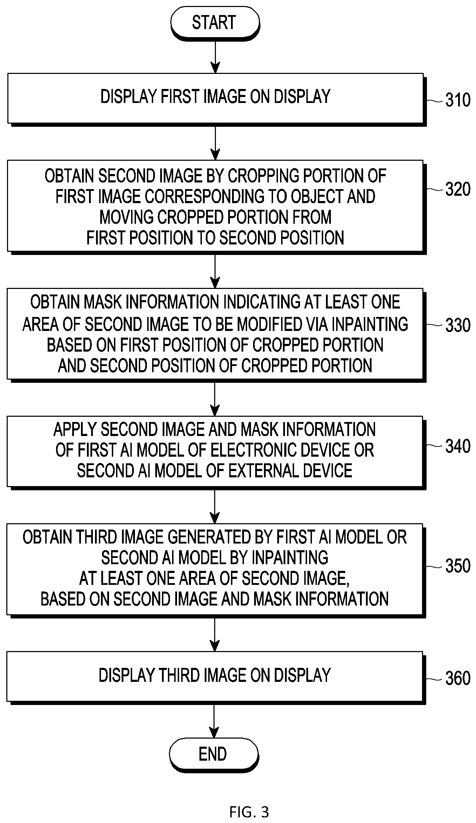

FIG. 3 is a flowchart illustrating an image generation operation using an AI model according to an embodiment.

Referring to FIG. 3, a processor (e.g., the processor 120 of FIG. 1 or the processor 220 of FIG. 2, hereinafter the processor 220 of FIG. 2 will be described as an example) of an electronic device (e.g., the electronic device 101 of FIG. 1 or the electronic device 201 of FIG. 2) according to an embodiment may perform at least one of operations 310 to 360.

In operation 310, the processor 220 according to an embodiment may display a first image on the display 260. The processor 220 according to an embodiment may display a user interface on the display 260, and may display the first image through the user interface. For example, the user interface may provide a screen for performing an image generation operation using an AI model when a user edits an image.

In operation 320, the processor 220 according to an embodiment may obtain a second image by cropping a portion of the first image corresponding to an object and moving the cropped portion from a first position to a second position with respect to the first image. The processor 220 according to an embodiment may crop (or segment from a background) a portion including the object (or an image of a subject) in the first position of the first image (e.g., a photo) and move the cropped portion (or segmented from the background) to the second position, which is different from the first position, based on an input through the user interface, thereby obtaining the second image. For example, the object may be an image of a subject belonging to any one of subject categories of a structure, a thing, a person, an animal, and/or a plant, and may also be an image of a subject belonging to another designated subject category. The processor 220 according to an embodiment may segment the object corresponding to the cropped portion and a background area outside the outline of the object (segmentation) (or segment the object) by using the outline of the object, based on a selection and movement input (e.g., a touch and drag or a click and drag) for selecting and moving a portion (area) in the first image via a user's touch or an input module (not illustrated) (e.g., stylus, mouse, or other input device). The processor 220 according to an embodiment may move the segmented (or cropped) portion to the second position, thereby obtaining the second image in which the segmented (or cropped) portion is moved to the second position. For example, as the cropped portion in the first position of the first image is moved to the second position, the second image may include an empty space in the first position, and may include the cropped portion in the second position having a different background from that in the first position.

According to an embodiment, when the cropped portion in the first position of the first image is moved from the first position to the second position, which is different from the first position, the object corresponding to the cropped portion may be placed in a background different from the original background (in the first position) and may look unnatural. According to an embodiment, the cropped portion of the first image may include an object corresponding to the cropped portion, and the object may be an image of a subject belonging to any one of the subject categories of a structure, an object, a person, an animal, and/or a plant. The image of the subject may represent a complete shape of the subject or a part of the complete shape of the subject. For example, the object corresponding to the cropped portion may be in contact with at least one edge (e.g., an edge or a side) of the first image, and may be displayed as a part of the complete shape of the subject (e.g., a part of a shape from the head to the toe of a person when the subject is a person (e.g., an upper body)), as opposed to the entirety of the complete shape of the subject, since the complete shape of the subject (e.g., a shape from the head to the toe of a person when the subject is a person) is cut by at least one edge. When the object that represents the part of the complete shape of the subject displayed as being in contact with at least one edge is moved from the first position where it is in contact with the at least one edge to a different position, that is, the second position where it is away from the edge, the object that represents the part of the complete shape of the subject may be displayed in the different background in the second position as if the subject is cut off and may thus appear unnatural. As another example, in a case in which the object corresponding to the cropped portion in the first position is displayed as a part of the complete shape of the subject, not as the complete shape of the subject, due to occlusion by another object corresponding to another portion, when the portion including the object corresponding to the part of the complete shape of the subject is moved from the first position to a different position, that is, the second position where the object is not occluded by the other object, the object corresponding to the moved portion may be displayed as the part of the complete shape of the subject that is lost to the extent of occlusion by the other object, in the second position having the different background, and thus may look unnatural. As another example, in a case in which the object corresponding to the cropped portion in the first position is in contact with at least one edge of the first image and displayed as a part of the complete shape of the subject since the complete shape of the subject is cut by at least one edge, when the object representing the part of the complete shape of the subject displayed as being in contact with the at least one edge is reduced in size and the reduced object is moved from the first position where it is in contact with an edge of the first image to the second position where it is not in contact with the edge, the reduced object may be displayed in the second position with the different background, as if it is cut off and may thus appear unnatural.

In operation 330, the processor 220 according to an embodiment may obtain mask information indicating at least one area of the second image to be modified via inpainting, based on the first position of the cropped portion and the second position of the cropped portion. According to an embodiment, based on the movement of the cropped portion from the first position to the second position (e.g., an analysis result of the object corresponding to the cropped portion or a user input with respect to the cropped portion), the processor 220 may identify at least one area to be modified in the second image via inpainting, and may obtain the mask information indicating the identified at least one area. For example, inpainting may be redrawing or filling a part or the whole of an image. According to an embodiment, at least one area may include a first area and a second area. According to an embodiment, the processor 220 may identify the first area corresponding to an empty space in the first position, based on the movement of the cropped portion. According to an embodiment, the processor 220 may identify the second area designated between the first position and the second position to modify the object corresponding to the cropped portion (to have a complete shape), based on the movement of the cropped portion. According to an embodiment, when the first position of the cropped portion contacts an edge of the first image and the cropped portion is moved from the first position to the second position, the processor 220 may designate the second area between the edge and the second position to modify the object corresponding to the cropped portion by filling a part of a shape of the object corresponding to the cropped portion.

The processor 220 according to an embodiment may designate the second area based on a result of analyzing the object corresponding to the cropped portion after the movement of the cropped portion and/or an area selected by a user input through the user interface with respect to the object corresponding to the cropped portion. The processor 220 according to an embodiment may designate the second area so that the object corresponding to the cropped portion after the movement of the cropped portion from the first position to the second position, becomes an object representing a subject shape that matches (or fits or is natural in) the background in the second position, which is different from the background in the first position.

According to an embodiment, when the first position of the cropped portion contacts an edge of the first image and the cropped portion is moved from the first position to the second position, the processor 220 may designate (or identify) the second area between the edge and the second position to modify the object corresponding to the cropped portion by filling a part of the shape of the object corresponding to the cropped portion.

If the cropped portion was in contact with at least one edge before the movement of the cropped portion (e.g., if the cropped portion includes an edge (a boundary line) of the first image), the processor 220 according to an embodiment may designate (or identify) an area (e.g., a rectangular area) between the at least one edge that the cropped portion was in contact with and the second position after the movement of the cropped portion in the second image, as the second area.

In the case of using the object analysis result, the processor 220 may analyze the cropped portion via segmentation and/or using an object detection engine (or software or program), and when the object corresponding to the cropped portion is identified as representing a part (or a part of the complete shape) rather than the complete shape (or the entire complete shape) of the subject, the processor 220 according to an embodiment may designate (or identify) an area for the object corresponding to the cropped portion to have the complete shape of the subject in the second image, as the second area. In the case of using the object analysis result, the processor 220 according to an embodiment may analyze the object corresponding to the cropped portion by using a depth estimation algorithm and the object detection engine, and when the object corresponding to the cropped portion is identified as being occluded by an object corresponding to a portion other than the cropped portion and as representing a part of the complete shape of the subject, not the complete shape, the processor 220 may identify the second area to be modified in the second image so that the object corresponding to the cropped portion represents the complete shape of the subject. In the case of using the object analysis result, the processor 220 according to an embodiment may analyze the object corresponding to the cropped portion, and when it is identified that the object corresponding to the cropped portion before the movement includes a part of the complete shape of the subject (e.g., another part of the complete shape of the subject is missing) since it is cut by at least one edge or occluded by another object, and includes a character, the processor 220 may recognize the character and obtain text corresponding to the character, apply the text to a large language model (LLM) to obtain expanded text including the text, and may obtain the second area to be modified in the second image and the expanded text information so that the object includes the complete shape of the subject and the expanded text.

In the case of using the area selected by the user input with respect to the cropped portion, the processor 220 according to an embodiment may display an area interface including the cropped portion through the user interface, expand the area interface based on the user input, and identify, as the second area, an area excluding the object corresponding to the cropped portion in the expanded area interface. In the case of using the area selected by the user input with respect to the cropped portion, the processor 220 according to an embodiment may display an area interface including the cropped portion, estimate a missing part of the object corresponding to the cropped portion by using the depth estimation algorithm and/or the object detection engine, provide information associated with the estimated missing part, and identify, as the second area, a portion excluding the object and including the missing part in the area interface based on the user input. In the case of using the area selected by the user input with respect to the cropped portion, the processor 220 according to an embodiment may display an area interface including the cropped portion, estimate a missing part of the object corresponding to the cropped portion by using the depth estimation algorithm and/or the object detection engine, provide information associated with the estimated missing part, expand the area interface based on the user input, and identify, as the second area, an area excluding the object and including the missing part in the expanded area interface.

In operation 340, the processor 220 according to an embodiment may proceed with application to the AI model (a first AI model (e.g., the AI model 232) of the electronic device 201 and/or a second AI model of an external device).

In the case of applying the second image and the mask information to the AI model 232 of the electronic device 201, the processor 220 according to an embodiment may execute the AI model 232 stored in the memory 230, input the second image and the mask information to the executed AI model 232, and obtain a third image generated by the AI model 232 by inpainting at least one area of the second image, based on the second image and the mask information. In the case of applying the second image and the mask information to the second AI model of the external device, the processor 220 according to an embodiment may transmit the second image and the mask information to the second AI model of the external device using communication circuitry (not illustrated) included in the electronic device 201, and receive the third image generated by the second AI model by inpainting at least one area of the second image, based on the second image and the mask information.

In operation 350, the processor 220 according to an embodiment may obtain the third image generated by the AI model by inpainting the at least one area of the second image, based on the second image and mask information.

The processor 220 according to an embodiment may transfer (or apply or input) the second image and the mask information to the AI model, may obtain an image of the first area and the second area generated by the AI model, and may combine the generated image of the first area and the second area with the second image, thereby obtaining the third image. The processor 220 according to an embodiment may further apply, to the AI model, the expanded text information together with the second image and mask information, generate a character-inclusive image corresponding to the first area and/or the second area, combine the generated character-inclusive image with the second image, obtaining the third image. The AI model 232 or the second AI model according to an embodiment may include one or more generative artificial intelligence models. For example, the generative artificial intelligence model may be an AI model that newly generates similar content by using content such as text, audio, and/or images. The generative artificial intelligence model may learn patterns of content and generate new content as an inference result. For example, in the image field, the generative AI model may regenerate an image that mimics a feature of a specific image. For example, the generative artificial intelligence model may include a generative adversarial network (GAN)-based image generation model or a stable diffusion-based image generation model. The stable diffusion-based image generation model may include an Open AI-based Dall-E model, an Imagen model, a Midjourney model, or a stable diffusion model.

In operation 360, the processor 220 according to an embodiment may display the third image on the display 260. The third image according to an embodiment may be an image generated by the AI model 232 by modifying an empty space image (or an image of a space where the object disappears) in the first area of the second image and an unnatural object image in the second area to be natural.

An image generation method using an artificial intelligence (AI) model in an electronic device (e.g., the electronic device 101 of FIG. 1 or the electronic device 201 of FIG. 2) according to an embodiment may include an operation of displaying a first image through a user interface on a display (e.g., the display module 160 of FIG. 1 or the display 260 of FIG. 2). The method according to an embodiment may include an operation of obtaining a second image by cropping a portion of the first image corresponding to an object and moving the cropped portion from a first position to a second position through the user interface. The method according to an embodiment may include an operation of obtaining mask information indicating at least one area of the second image to be modified via inpainting, based on the first position of the cropped portion and the second position of the cropped portion. The method according to an embodiment may include an operation of applying the second image and the mask information to the AI model. The method according to an embodiment may include an operation of obtaining a third image generated by the AI model, based on the second image and the mask information. The method according to an embodiment may include an operation of displaying the third image on the display.

The at least one area may include a first area and a second area, and the method according to an embodiment may further include an operation of identifying the first area corresponding to an empty space in the first position, based on the movement of the cropped portion, and an operation of identifying the second area designated between the first position and the second position to modify the object corresponding to the cropped portion, based on the movement of the cropped portion.

The method according to an embodiment may further include, when the first position of the cropped portion contacts an edge of the first image and the cropped portion is moved from the first position to the second position, an operation of designating the second area between the edge and the second position to modify the object corresponding to the cropped portion by filling a part of a shape of the object corresponding to the cropped portion.

In the method according to an embodiment, the AI model may include the first AI model stored in memory of the electronic device. The method according to an embodiment may further include an operation of inputting the second image and the mask information to the first AI model, and an operation of obtaining the third image generated by the first AI model, based on the second image and the mask information.

In the method according to an embodiment, the AI model may include a second AI model of an external device. The method according to an embodiment may further include an operation of transmitting the second image and the mask information to the second AI model of the external device by using communication circuitry of the electronic device, and an operation of receiving the third image generated by the second AI model by inpainting the at least one area of the second image, based on the second image and the mask information.

The method according to an embodiment may include an operation of identifying the object via segmentation of the cropped portion. The method may include an operation of estimating a subject represented by the object and a shape of the subject represented by the object, by using an object detection engine. The method may include an operation of identifying a shape of the object, based on the estimated shape of the subject.

The method according to an embodiment may include an operation of identifying whether the object corresponding to the cropped portion in the first image is occluded by another object corresponding to another portion of the first image by using a depth estimation algorithm. The method may include, when the object corresponding to the cropped portion of the first image is occluded by the other object corresponding to the other portion, an operation of identifying the shape of the subject represented by the object by using the object detection engine. The method may include an operation of estimating a missing part of the object's shape, which is missed from the shape of the object, based on the shape of the subject represented by the object.

The method according to an embodiment may include an operation of displaying, through the user interface, an area interface including the cropped portion after the movement of the cropped portion. The method may include an operation of expanding the area interface, based on a user input. The method may include an operation of identifying the second area designated in the expanded area interface in order to modify the object corresponding to the cropped portion, based on the movement of the cropped portion.

The method according to an embodiment may include an operation of estimating a missing part of the object's shape, which is missed from the shape of the object corresponding to the cropped portion, by using the depth estimation algorithm and/or the object detection engine, after the movement of the cropped portion. The method may include an operation of providing information associated with the estimated missing part.

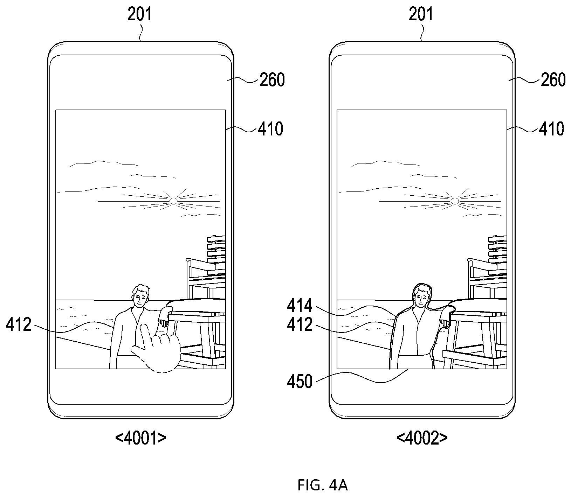

FIG. 4A is a diagram illustrating an example of screens when a cropped portion of a first image is moved from a first position to a second position according to an embodiment.

Referring to FIG. 4A, the processor 220 (or the processor 120 of FIG. 1) of the electronic device 201 (or the electronic device 101 of FIG. 1) according to an embodiment may display a first image 410 on the display 260 (or the display 160 of FIG. 1) as shown in diagram 4001. For example, the first image 410 may be a photograph including a plurality of objects.

As shown in diagram 4002, in response to a user input for selecting a portion 412 (e.g., a portion including an image of a subject (or a person object) belonging to a category of a person) in a first position of the first image 410 through a user interface, the processor 220 according to an embodiment may segment (or crop) the selected portion 412 from a background via segmentation, and may display the cropped portion 412 or a graphic effect (or an outline of the cropped portion) 414 indicating the cropped portion 412 in the first image 410. The processor 220 according to an embodiment may move (place) the cropped portion 412 to a different position, that is, a second position, in response to a user input (e.g., a touch input by a user hand) for moving the cropped portion 412 to the second position, which is the different position.

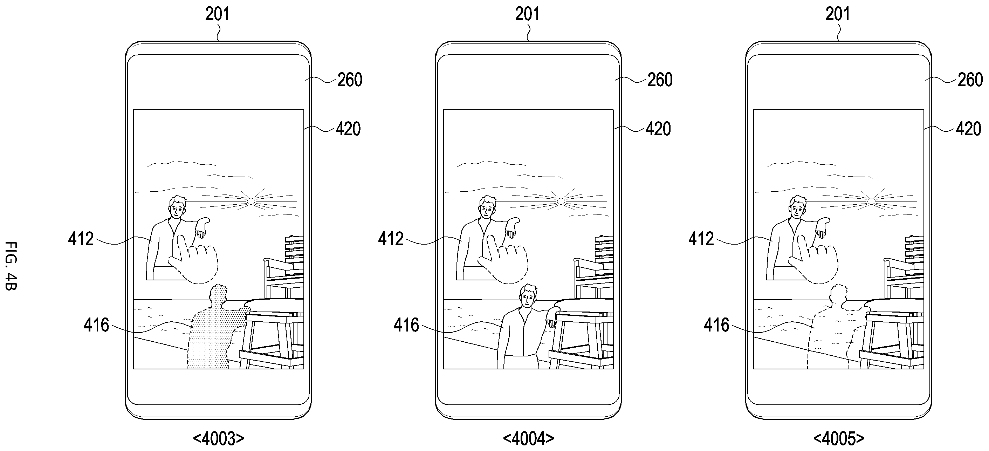

FIG. 4B is a diagram illustrating an example of screens where a second image, in which the cropped portion of the first image is moved to the different position, that is, the second position, is obtained according to an embodiment.

Referring to FIG. 4B, the processor 220 (or the processor 120 of FIG. 1) of the electronic device 201 (or the electronic device 101 of FIG. 1) according to an embodiment may transitorily or non-transitorily obtain (or store), in the memory 230, a second image 420 in which the cropped portion (e.g., an object) 412 is moved and placed in the second position, as shown in diagrams 4003 to 4005. For example, the processor 220 may display an empty space in a first area 416 in the first position according to the user input for moving the cropped portion 412 from the first position to the second position, which is different from the first position, and the cropped portion 412 may be placed in front of a different background in the second position, as shown in diagram 4003. For example, according to the user input for moving the cropped portion 412 from the first position to the second position, which is different from the first position, the processor 220 may duplicate the cropped portion 412, and may place the duplicated cropped portion 412 in front of the different background in the second position, as shown in diagram 4004. For example, as shown in diagram 4005, according to the user input for moving the cropped portion 412 from the first area 416 in the first position to the second position, which is different from the first position, the processor 220 may place the cropped portion 412 in front of the different background in the second position, and may delete the first area 416 by filling the same with a surrounding background by using an AI eraser.

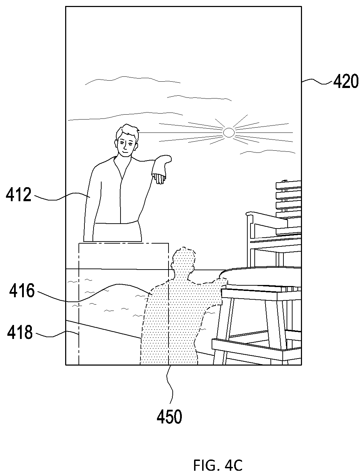

FIG. 4C is a diagram illustrating an example of identifying a second area in the second image so that, after the movement of the cropped portion, an object corresponding to the cropped portion represents a subject shape that matches the background in the second position different from the background in the first position according to an embodiment.

Referring to FIG. 4C, the processor 220 (or the processor 120 of FIG. 1) of the electronic device 201 (or the electronic device 101 of FIG. 1) according to an embodiment may analyze the object corresponding to the cropped portion after the movement of the cropped portion, and identify (or select or determine) a second area 418 to be modified in the second image 420 based on a result of the object analysis. According to an embodiment, when the cropped portion 412 is moved from the first position to the second position, which is different from the first position, the object corresponding to the cropped portion may be placed in the background in the second position different from the background in the first position, and thus, may appear unnatural. For example, in a state in which the object corresponding to the cropped portion 412 is in contact with an edge 450 (e.g., an edge or side) of the first image 410, and is displayed as incomplete shape of the subject (person) since a complete shape of the subject (person) is cut by the edge 450, when the cropped portion 412 is moved from the edge 450 to another position (e.g., the second position) in the central direction, the object image (e.g., the subject (person)) of the cropped portion 412 may be placed in the different background in the second position and displayed as if the subject (person) is cut off and may thus appear unnatural.

According to an embodiment, the processor 220 may analyze the cropped portion 412 to identify whether the object corresponding to the cropped portion 412 was in contact with the edge 450 before the movement, and may identify an area (e.g., a rectangular area) from the edge 450, which the object corresponding to the cropped portion 412 was in contact with before the movement of the cropped portion 412, to the second position after the movement of the cropped portion 412 as a second area 418 to be modified in the second image 420. When the processor 220 according to an embodiment analyzes the cropped portion 412 by using segmentation and an object detection engine (or software or program) and identifies that the object corresponding to the cropped portion 412 is a subject in a person category and that the object is a part of a complete shape of a person, the processor 220 may identify (or select or determine) an area from the edge 450, which the object was in contact with before the movement, to the second position after the cropped portion is moved as the second area 418 to be modified in the second image 420, so as to enable the object to represent the complete shape of the person in the second image 420. According to an embodiment, the processor 220 may display the second area 418 on the display 260, or may not display the second area 418 on the display 260. The processor 220 according to an embodiment may obtain position information or a value (e.g., a coordinate value) of the second area 418.

According to an embodiment, the processor 220 may expand the second area 418 according to additional information. For example, after identifying the second area 418, the processor 220 may expand the second area 418 to apply a shadow of the object based on shadow information in accordance with a projection direction of light (the direction of light projected onto the object) in the second image 420.

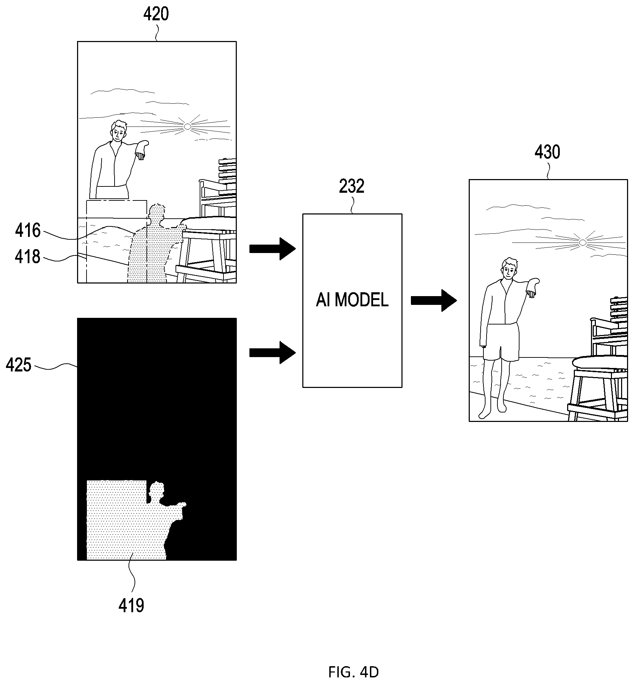

FIG. 4D is a diagram illustrating an example of obtaining a third image by transferring the second image and mask information obtained based on at least one area, to an AI model according to an embodiment.

Referring to FIG. 4D, the processor 220 (or the processor 120 of FIG. 1) of the electronic device 201 (or the electronic device 101 of FIG. 1) according to an embodiment may obtain mask information 425 indicating an area 419 to be modified in the second image (an area in which an image is generated by the first AI model 232 or the second AI model in the second image), by using the first area 416 and/or the second area 418. The processor 220 according to an embodiment may transfer (or apply or input) the second image 420 and the mask information 425 to the first AI model (e.g., the AI model 232) or the second AI model, and may obtain a third image 430 generated through the first AI model or the second AI model.

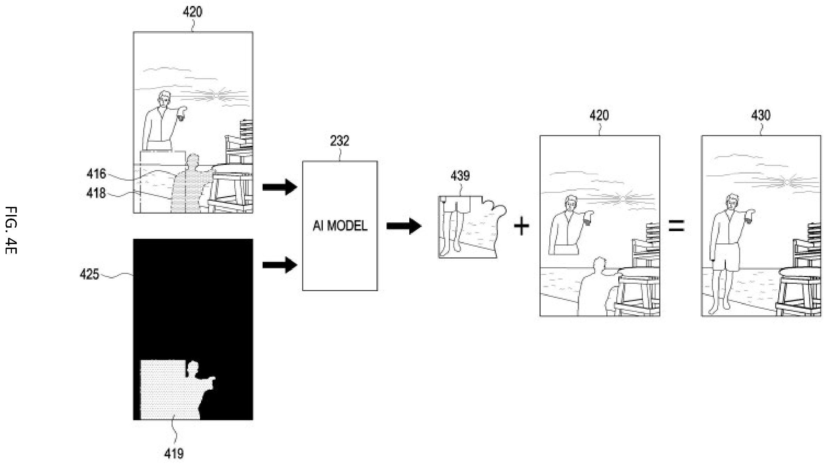

FIG. 4E is a diagram illustrating an example of transferring the second image and the mask information obtained based on the first area and the second area to the AI model, obtaining an image corresponding to the mask information, and combining the image corresponding to the mask information with the second image so as to obtain the third image, according to an embodiment.

Referring to FIG. 4E, the processor 220 (or the processor 120 of FIG. 1) of the electronic device 201 (or the electronic device 101 of FIG. 1) according to an embodiment may obtain mask information 425 indicating the area 419 to be modified in the second image (the area in which the image is generated by the first AI model 232 or the second AI model in the second image) by using the first area 416 and/or the second area 418.

The processor 220 according to an embodiment may transfer (or apply, or input) the second image 420 and the mask information 425 to the first AI model (e.g., the AI model 232) or the second AI model, and may generate the image corresponding to the mask information (e.g., an image 439 corresponding to the first area 416 and the second area 418). The processor 220 according to an embodiment may obtain (or combine) the third image 430 by using the second image 420 and the generated image 439.

The third image 430 according to an embodiment may be an image generated by modifying an image of an empty space (or an image of a space in which the object 412 disappears) in the first area 416 and an unnatural image in the second area 418 in the second image 420 to be natural by using the first AI model (e.g., the AI model 232) or the second AI model.

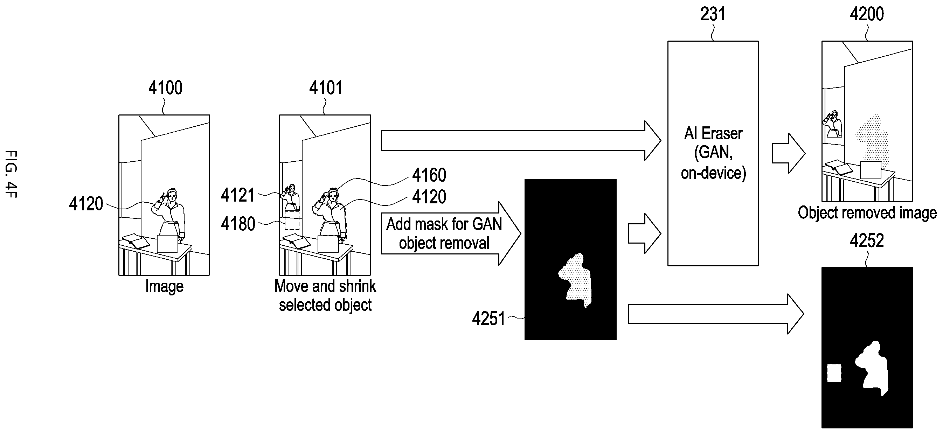

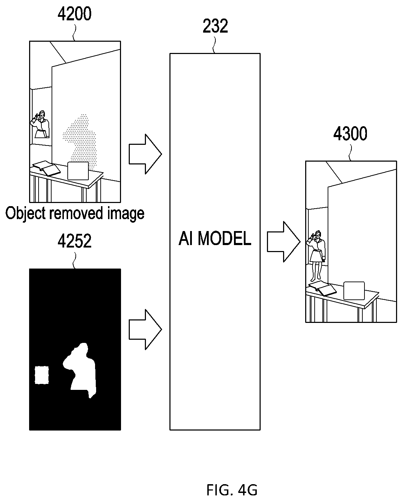

FIG. 4F is a diagram illustrating a second image and mask information, which are obtained when a cropped portion in a first position is copied to a second position, which is different from the first position, and an empty space of the cropped portion in the first position is erased by using an AI eraser according to an embodiment. FIG. 4G is a diagram illustrating an example of obtaining a third image by transferring a second image and mask information, which are obtained using an AI eraser, to an AI model, according to an embodiment.

Referring to FIG. 4F, according to a user input for moving a portion 4120 in a first position of the first image 4100 to another position, the processor 220 (or the processor 120 of FIG. 1) of the electronic device 201 (or the electronic device 101 of FIG. 1) according to an embodiment may duplicate the portion 4120 of the first image 4100, and move the duplicated portion to display the same in front of a different background in a second position that is different from the first position. According to an embodiment, the processor 220 may obtain an image 4101 in which a moved portion 4121 of the first image 4100 is displayed in front of the different background in the second position, and mask information 4251 (e.g., first mask information) indicating a first area 4160 corresponding to the portion 4120 of the first image 4100 before the movement. The processor 220 according to an embodiment may transfer (or apply or input) the image 4101, in which the moved portion of the first image 4100 is displayed in front of the different background in the second position, and the first mask information 4251 to the AI eraser 231, and obtain a second image 4200 in which the moved portion 4121 of the first image 4100 is displayed in front of the different background in the second position and the portion 4120 of the first image 4100 before the movement is deleted (or replaced with background). The processor 220 according to an embodiment may analyze an object corresponding to the moved portion 4121 of the first image 4100, and may identify a second area 4180 to be modified in the image 4101 in which the object corresponding to the moved portion 4121 of the first image 4100 is displayed in front of the different background in the second position, based on a result of the analysis of the object corresponding to the moved portion 4121 of the first image 4100. The processor 220 according to an embodiment may obtain mask information 4252 (e.g., second mask information) indicating an area to be modified in the second image 4200 via inpainting, by using the first area 4160 and the second area 4180.

Referring to FIG. 4G, the processor 220 according to an embodiment may transfer (or apply or input) the second image 4200 and the second mask information 4252 to the first AI model (e.g., the AI model 232) or the second AI model, and may obtain a third image 4300 generated by the first AI model (e.g., the AI model 232) or the second AI model, based on the second image 4200 and the second mask information 4252.

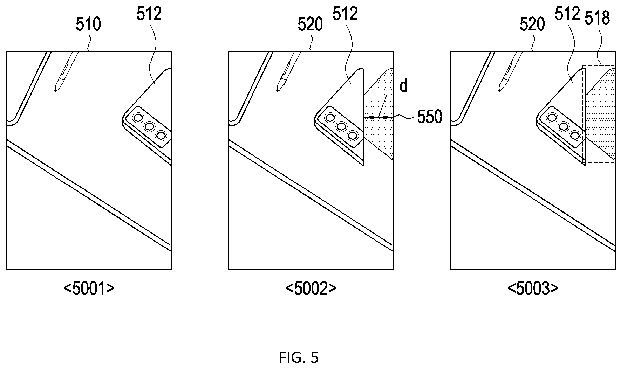

FIG. 5 is a diagram illustrating an example of designating, as a second area to be modified in a second image, an area between an edge which a cropped portion was in contact with in a first image and a second position to which the cropped portion is moved, if the cropped portion in a first position of the first image was in contact with the edge, according to an embodiment.

Referring to FIG. 5, the processor 220 (or the processor 120 of FIG. 1) of the electronic device 201 (or the electronic device 101 of FIG. 1) according to an embodiment may select a portion 512 that is in contact with an edge in a first image 510, as shown in diagram 5001.

The processor 220 according to an embodiment may move the cropped portion 512 of the first image 510 from a first position to a second position based on an input corresponding to movement and display a second image 520 in which the cropped portion 512 is moved to the second position, as shown in diagram 5002. The processor 220 according to an embodiment may identify a second area based on a distance d by which the cropped portion 512 is moved from an edge 550 of the first image 510.

The processor 220 according to an embodiment may designate (or identify) an area 518 from the edge 550 of the first image 510 to the extent of the distance d by which the cropped portion 512 is moved as the second area to be modified in the second image 520, as shown in diagram 5003.

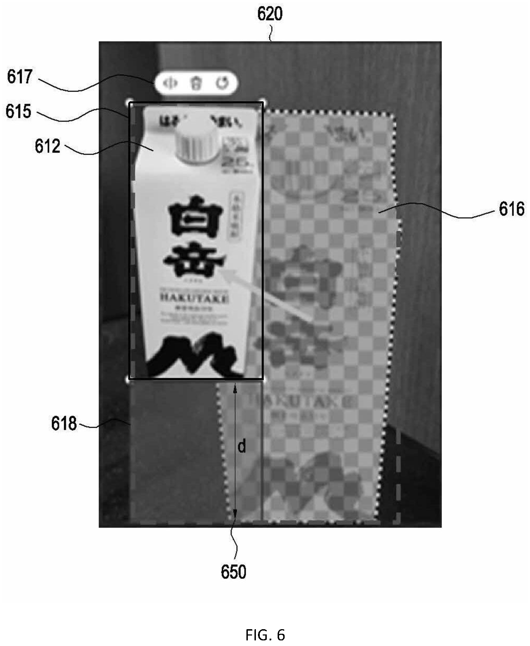

FIG. 6 is a diagram illustrating an example of designating a second area in a second image when the second image is generated in a manner that a cropped portion is reduced in a state in which the cropped portion is in contact with an edge in a first image before being moved, and moved from a first position to a second position, according to an embodiment.

Referring to FIG. 6, the processor 220 according to an embodiment may select and crop an image portion in the first position and reduce the cropped image portion 616, based on a user input through a user interface. As the cropped image portion 616 is cropped and reduced, the processor 220 according to an embodiment may display the cropped and reduced image portion 612 in the second position, which is different from the first position. The processor 220 according to an embodiment may display an area interface (e.g., a handler) (or an area selection interface) 615 that indicates an area including the cropped and reduced image portion 612 in the second position, and may display at least one editing menu 617 associated with the cropped and reduced image portion 612 (e.g., a menu for inverting an object corresponding to the cropped and reduced image portion, a menu for deleting an object, or a menu for rotating an object) at the upper portion of the area interface.

When the image portion 612 in the first position is reduced and moved to the second position, which is different from the first position, the processor 220 according to an embodiment may identify an area 618, based on a distance d from an edge 650 of a second image 620, which the image portion 616 (or the object in the first position) was in contact with, to the second position corresponding to the image portion 612. The processor 220 according to an embodiment may determine the area 618 identified based on the distance d from the edge 650 of the second image 620, which the image portion 616 was in contact with, to the second position according to the movement of the image portion 616, as the second area to be modified in the second image.

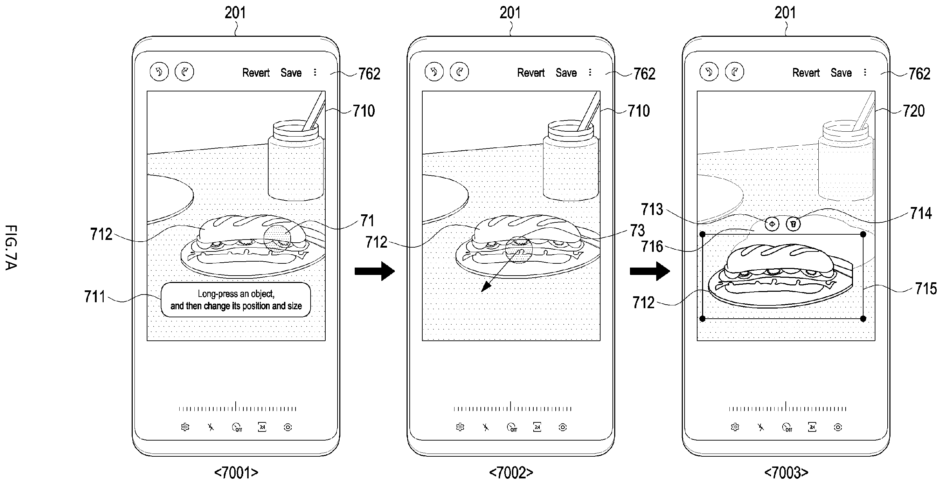

FIG. 7A to FIG. 7C illustrate an example of identifying (or selecting) a second area to be modified in a second image, based on an area selected by a user input, in a case where a portion in a first position of a first image is moved to a second position, which is different from the first position according to an embodiment.

FIG. 7A a diagram illustrating an example of screens in a case of selecting a portion in a first position of a first image by a user and moving the portion to a second position, which is different from the first position, according to an embodiment.

Referring to FIG. 7A, the processor 220 (or the processor 120 of FIG. 1) of the electronic device 201 (or the electronic device 101 of FIG. 1) according to an embodiment may display a first image 710 on the display 260 (or the display 160 of FIG. 1) through a user interface (e.g., an image editing application screen 762), as shown in diagram 7001. For example, various function icons (or menus) associated with editing of the first image 710 may be further displayed in the image editing application screen 762. For example, the first image 710 may be a photograph including a plurality of objects. In response to an input (e.g., a tap or touch input) with respect to an object 712 (e.g., a plate with bread and a fork) corresponding to a first portion in a first position, the processor 220 according to an embodiment may display guide text 711. For example, the guide text 711 may include text that provides a method of inputting a user input to the object 712. For example, the guide text 711 may include text such as "Long-press an object, and then change its position and size." In response to a user input 71 (e.g., tap & hold or long press) for segmenting the object 712 corresponding to the first portion in the first position of the first image 710 from a background, the processor 220 according to an embodiment may segment the object 712 from the background.

In response to a user input 73 (e.g., a drag) for moving the object 712 corresponding to the first portion in the first position to a second position, which is different from the first position, the processor 220 according to an embodiment may display the object 712 in a state of being moved (e.g., a floating state), as shown in diagram 7002.

Upon completion of the movement of the object 712 from a first position (or first area) 716 to the second position, which is different from the first position (released after drag), the processor 220 according to an embodiment may display a second image 720 and an area interface (or area selection interface) (e.g., a handler) 715 including the object 712, as shown in diagram 7003.

In the area interface 715 according to an embodiment, an apply menu 713 and a menu 714 (e.g., a drawing button) for enabling a user to select a second area to be changed (or modified) in the second image 720 may be displayed. The processor 220 according to an embodiment may apply the state in which the object corresponding to the first portion in the first position is moved, as the apply menu 713 is selected. When the menu 714 for enabling the user to select the second area to be modified in the second image 720 is selected, the processor 220 according to an embodiment may change the area interface 715 to a state in which the user is capable of performing selection (or adjustment).

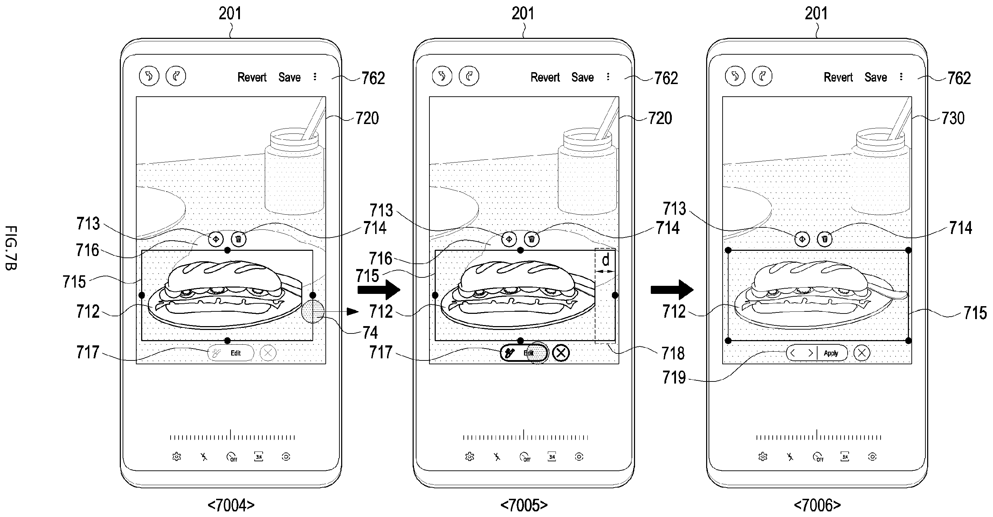

FIG. 7B is a diagram illustrating an example of screens in which a second area 718 is determined by the user by using the area interface 715 according to an embodiment.

Referring to FIG. 7B, the processor 220 (or the processor 120 of FIG. 1) of the electronic device 201 (or the electronic device 101 of FIG. 1) according to an embodiment may receive a user input 74 for adjusting (e.g., expanding) the area interface 715, as shown in diagram 7004. The processor 220 according to an embodiment may display an edit button 717 at the lower portion of the area interface 715 in an inactive state (e.g., a dim state) while the area interface 715 is being adjusted (or expanded). When adjustment (or expansion) of the area interface 715 is completed, the processor 220 according to an embodiment may activate (e.g., deactivate the dim state) and display the edit button 717 for generating an expanded area, as shown in diagram 7005. When the edit button 717 is input by the user, the processor 220 according to an embodiment may determine the second area 718 to be modified in the second image 720, based on the area adjusted (and expanded) through the area interface 715. When the object 712 (e.g., the plate with bread and the fork) is cut by an edge and a part of the fork is missing, the processor 220 may determine the second area 718 to be modified in the second image 720, based on a distance d by which the object 712 (or the first portion in the first position) is moved from the edge.

When the second area 718 to be modified in the second image 720 is designated (or determined), the processor 220 according to an embodiment may transfer (or apply or input) the second image 720 and mask information based on the second area 718 to a first AI model (e.g., the AI model 232) or a second AI model, so as to generate (or obtain) an image of the second area 718. The processor 220 according to an embodiment may transfer (or apply or input) the second image 720 and the mask information based on the second area 718 to the second AI model of an external server through the communication circuitry 290, may receive a plurality of images for the second area 718 from the external server, and may select one image from the plurality of images for the second area 718, based on a user input. The processor 220 according to an embodiment may display the obtained (or generated or selected) image of the second area 718 and display an apply button 719 at the lower portion of the area interface 715. The processor 220 according to an embodiment may display a third image 730 in which the image of the second area 718 is applied (or combined) based on an input to the apply button 719.

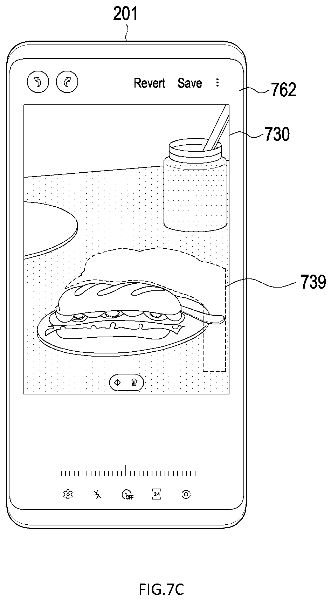

FIG. 7C is a diagram illustrating a screen in which an image corresponding to a first area and an image corresponding to a second area are generated and combined with a second image, according to an embodiment.

Referring to FIG. 7C, when the second area 718 is designated (or determined or identified) and an input to the apply button 719 of FIG. 7B is provided, the processor 220 (or the processor 120 of FIG. 1) of the electronic device 201 (or the electronic device 101 of FIG. 1) according to an embodiment may apply, to the first AI model (e.g., the AI model 232) or the second AI model, the second image 720 and the mask information indicating a generation area for an image corresponding to the first area 716 and an image corresponding to the second area 718, and may generate an image 739 corresponding to a mask area including the first area 716 and the second area 718. The processor 220 according to an embodiment may combine the generated image 739 corresponding to the second area 718 and the image of the first area 716 with the second image 720 to obtain and display the third image 730.

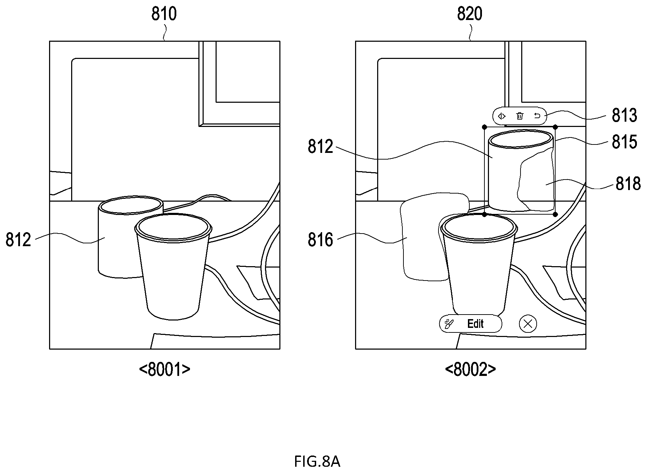

FIG. 8A is a diagram illustrating an example of designating a second area in a second image according to a user input using an area interface including a portion of a first image, when the portion is selected and moved, according to an embodiment.

Referring to FIG. 8A, in response to a user input for selecting a partial image 812 (e.g., an object (e.g., a cup), hereinafter also referred to as an object) in a first position of a first image 810, the processor 220 (or the processor 120 of FIG. 1) of the electronic device 201 (or the electronic device 101 of FIG. 1) according to an embodiment may segment the selected object 812 from a background via segmentation, as shown in diagram 8001.

Upon completion of the movement of the object 812 from the first position to a second position, which is different from the first position, the processor 220 according to an embodiment may display a second image 820 and an area interface (e.g., a handler) 815 including the moved object 812, as shown in diagram 8002. The processor 220 according to an embodiment may further display menus 813 (e.g., invert, rotate, or delete) for editing the object 812 together with the area interface 815.

When an area is selected by a user in a case where the object 812 is selected and moved, the processor 220 according to an embodiment may estimate a missing part 818 of the object 812 in the selected area by using a depth estimation algorithm and/or an object detection engine. For example, the processor 220 may identify whether the object 812 was occluded by another object (e.g., whether the object is in an overlapping state (osculation) with another object and is located farther than the other object) through the depth estimation algorithm, and when the object 812 was occluded by the other object, may detect a subject category (e.g., cup) to which the object 812 belongs by using the object detection algorithm, may identify how much (e.g., what percentage) of a shape of the subject category that the object 812 satisfies, and may identify that a shape of the object 812 is missing based on the percentage of the subject category that the object 812 satisfies. The processor 220 according to an embodiment may provide a user interface (UI) (e.g., the area interface 815) for determining a second area including the missing part 818, based on identifying the loss of the shape of the object 812. The processor 220 according to an embodiment may receive a designation of the missing part 818 by the user in an area via the area interface 815. The processor 220 according to an embodiment may determine, as the second area to be modified in the second image 820, an area excluding the object 812 and an area including the designated missing part 818 in the area interface 815.

The processor 220 according to an embodiment may correct the shape, lightness, and/or color of the object 812 in the area via the area interface 815. For example, when the cup object 812 with contrast by a shadow due to occlusion by another object is moved to another area, the contrast of the object 812 needs to disappear due to the nonexistence of the other object. When the contrast needs to disappear due to the movement of the cup object 812, the processor 220 may correct the contrast of the cup object 812.

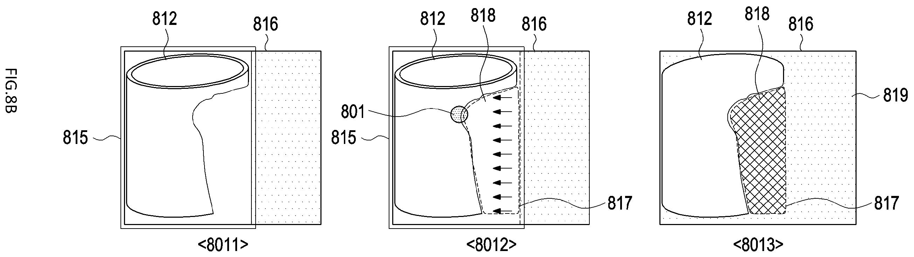

FIG. 8B is a diagram illustrating an example of determining a second area in a second image, based on a missing part of a shape of an object and a partially expanded area in a state in which an area interface including an object is partially expanded, according to an embodiment.

Referring to FIG. 8B, the processor 220 (or the processor 120 of FIG. 1) of the electronic device 201 (or the electronic device 101 of FIG. 1) according to an embodiment may expand a portion of the area interface 815 and display an expanded area interface 816, based on a user input with respect to the area interface 815 including the object 812, as shown in diagram 8011. The processor 220 according to an embodiment may expand the area interface 815 in a desired direction among four directions (e.g., 4 directions) of the sides of a rectangle.

The processor 220 according to an embodiment may receive a designation of the missing part 818 of the shape of the object 812, based on a user input in the expanded area interface 816, as shown in diagram 8012. For example, the processor 220 may receive a designation of an area including a loss point 801 of the shape of the object 812, from an edge 817 of the area interface 815, as the missing part 818. When the display 260 of the electronic device 201 is a rollable display, the processor 220 according to an embodiment may display the expanded area interface 816 in a display screen in an expanded size as the size of the display screen is expanded, and may receive a designation of the missing part 818 of the shape of the object 812, based on a user input in the expanded area interface 816.

The processor 220 according to an embodiment may determine an area excluding the object 812 and an area including the designated missing part 818 of the shape of the object in the expanded selection interface 816, as a second area 819 in the second image 820, as shown in in diagram 8013.

A non-transitory storage medium storing instructions, wherein the instructions, when executed by the electronic device 101 or 201, may cause the electronic device to perform at least one operation, and the at least one operations may include: an operation of displaying a first image through a user interface on the display 160 or 260; an operation of obtaining a second image by cropping a portion of the first image corresponding to an object and moving the cropped portion from a first position to a second position with respect to the first image through a user interface; an operation of obtaining mask information indicating at least one area of the second image to be modified via inpainting, based on the first position of the cropped portion and the second position of the cropped portion; an operation of applying the second image and the mask information to an AI model; an operation of obtaining a third image generated by the AI model, based on the second image and the mask information; and an operation of displaying the third image on the display.

The technical problems to be achieved in the disclosure are not limited to those mentioned above, and other technical problems not mentioned above will be clearly understood by those skilled in the art to which the disclosure pertains.

According to the disclosure, when an object is moved in an image (e.g., a first image), an image is obtained by generating an incomplete part of the moved object by using an artificial intelligence model so that a shape of the moved object appears natural in the image (e.g., a second image) in which the object is moved, and the obtained image (e.g., a third image) is provided. Accordingly, when then object is moved in the image, the moved object appears natural.

The effects that may be obtained from the disclosure are not limited to the above-mentioned effects, and other effects not mentioned herein will be clearly understood by those skilled in the art to which the disclosure pertains.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As used herein, the term "if" may be understood to mean "when" or "in response to determining" or "in response to detecting," as appropriate in the context. Similarly, "if it is determined to ~," or "if [mentioned condition or event] is detected" may be selectively understood to mean "when determining," or "in response to determining," "when detecting [mentioned condition or event]," or "in response to detecting [mentioned condition or event]," selectively.

The above-described device may be implemented as hardware components, software components, and/or a component of hardware components and software components. For example, the device and components described in the embodiments may be implemented by using one or more general-purpose or special-purpose computers, such as a processor, a controller, an arithmetic logic unit (ALU), a digital signal processor (DSP), a microcomputer, a field programmable gate array (FPGA), a programmable logic unit (PLU), a microprocessor, or any other device capable of executing an instruction and responding thereto. A processing device (or processing circuitry) may perform an operating system (OS) and one or more software applications performed on the operating system. In addition, the processing device may access, store, manipulate, process, and generate data in response to the execution of the software. For ease of understanding, it is sometimes described that a single processing device is used, but those skilled in the art would understand that the processing device may include multiple processing elements and/or multiple types of processing elements. For example, the processing device may include multiple processors or one processor and one controller. In addition, another processing configuration, such as a parallel processor, may also be used.

Software may include a computer program, code, an instruction, or a combination of one or more thereof, and may configure a processing device to operate as desired or independently or collectively provide a command to the processing device. The software and/or data may be embodied in any type of machine, component, physical device, computer storage medium, or device, so as to be interpreted by a processing device or to provide a command or data to the processing device. The software may be distributed across a computer system connected through a network, and may be stored or executed in a distributed manner. The software and data may be stored in one or more computer-readable recording media.

A method according to embodiments may be implemented in the form of program commands that may be performed through various computer devices, and may be recorded in a computer-readable medium. In this case, the medium may continuously store a program executable by a computer, or may temporarily store the program for execution or downloading. In addition, the medium may be various recording or storage means in the form of a single hardware entity or a combination of multiple hardware entities, and may not be limited to a medium directly connected to a computer system, but may be distributed across a network. Examples of the medium may include a magnetic medium such as a hard disk, a floppy disk, and a magnetic tape, an optical recording medium such as a CD-ROM and a DVD, a magneto-optical medium such as a floptical disk, and ROM, RAM, and flash memory, which are configured to store the program instructions. In addition, other examples of the medium may include a recording medium or a storage medium managed by an application store for distributing applications, or by a website, a server, or the like that supplies or distributes various types of software.

Although the embodiments have been described with reference to the limited embodiments and drawings, those skilled in the art will appreciate that various modifications and changes may be made thereto. For example, although the described techniques are performed in a different order from the described method, and/or the described components of the systems, structures, devices, circuits, and the like may be coupled or combined in a different form from the described method or may be replaced or substituted by other components or equivalents, appropriate results may be achieved.

Therefore, other implementations, other embodiments, and equivalents to the appended claims also fall within the scope of the claims.

## Claims

1. An electronic device (101, 201) comprising:
a display (160, 260);
at least one processor (120, 220) including processing circuitry; and
memory including one or more storage media storing instructions,
wherein the instructions, when executed by the at least one processor individually or collectively, cause the electronic device to:
display a first image through a user interface on the display,
obtain a second image by cropping a portion of the first image corresponding to an object and moving the cropped portion from a first position to a second position with respect to the first image through the user interface,
obtain mask information indicating at least one area of the second image to be modified by inpainting based on the first position of the cropped portion and the second position of the cropped portion,
apply the second image and the mask information to an AI model,
obtain a third image generated based on the second image and the mask information by the AI model, and
display the third image on the display.

2. The electronic device of claim 1,
wherein the at least one area includes a first area and a second area,
wherein the instructions, when executed by the at least one processor individually or collectively, cause the electronic device to:
identify the first area corresponding to an empty space of the first position based on a movement of the cropped portion, and
identify the second area designated between the first position and the second position to modify the object corresponding to the cropped portion based on a movement of the cropped portion.

3. The electronic device of claim 1 or 2,
wherein the instructions, when executed by the at least one processor individually or collectively, cause the electronic device to:
when the first position of the cropped portion contacts an edge of the first image and the cropped portion is moved from the first position to the second position, designate the second area between the edge and the second position to modify the object corresponding to the cropped portion by filling a part of a shape of the object corresponding to the cropped portion.

4. The electronic device of claims 1 to 3,
wherein the AI model includes a first AI model stored in the memory,
wherein the instructions, when executed by the at least one processor individually or collectively, cause the electronic device to:
input the second image and the mask information to the first AI model, and
obtain the third image generated through inpainting of the at least one area of the second image by the first AI model based on the second image and the mask information.

5. The electronic device of claims 1 to 3, further comprising:
communication circuitry,
wherein the AI model includes a second AI model of an external device,
wherein the instructions, when executed by the at least one processor individually or collectively, cause the electronic device to:
transmit, by using the communication circuitry, the second image and the mask information to the second AI model of the external device, and
receive the third image generated through inpainting of the at least one area of the second image by the second AI model based on the second image and the mask information.

6. The electronic device of any one of claims 1 to 5,
wherein the instructions, when executed by the at least one processor individually or collectively, cause the electronic device to:
identify the object through segmentation of the cropped portion,
estimate a subject represented by the object and a shape of the subject by using an object detection engine,
identify the shape of the object based on the estimated shape of the subject.

7. The electronic device of any one of claims 1 to 6,
wherein the instructions, when executed by the at least one processor individually or collectively, cause the electronic device to:
identify whether the object corresponding to the cropped portion is occluded by another object corresponding to another portion in the first image by using a depth estimation algorithm,
when the object corresponding to the cropped portion of the first image is occluded by the another object corresponding to another portion, identify a shape of a subject represented by the object using an object detection engine, and
estimate a missing part of the object's shape, which is missed in the shape of the object, based on the shape of the subject represented by the object.

8. The electronic device of any one of claims 1 to 7,
wherein the instructions, when executed by the at least one processor individually or collectively, cause the electronic device to:
display, through the user interface, an area interface containing the cropped portion after moving the cropped portion,
expand the area interface based on a user input, and
identify the second area designated in the expanded area interface to modify the object corresponding to the cropped portion based on a movement of the cropped portion.

9. The electronic device of any one of claims 1 to 8,
wherein the instructions, when executed by the at least one processor individually or collectively, cause the electronic device to:
estimate the missing part of the object's shape, which is missed in the shape of the object corresponding to the cropped portion, using a depth estimation algorithm and/or an object detection engine after moving the cropped portion, and
provide information about the estimated missing part of the object corresponding to the cropped portion.

10. The electronic device of any one of claims 1 to 9,
wherein the mask information includes binary information indicating the at least one area in the second image to be inpainted by the first AI model or the second AI model,
wherein the first AI model or the second AI model includes a GAN (generative adversarial network)-based image generation model or a stable diffusion-based image generation model.

11. A method of generating an image by using an artificial intelligence model in an electronic device (101, 201), the method comprising:
displaying a first image through a user interface on a display (160, 260);
obtaining a second image by cropping a portion of the first image corresponding to an object and moving the cropped portion from a first position to a second position with respect to the first image through the user interface;
obtaining mask information indicating at least one area of the second image to be modified by inpainting, based on the first position of the cropped portion and the second position of the cropped portion;
applying the second image and the mask information to an AI model;
obtaining a third image generated based on the second image and the mask information by the AI model; and
displaying the third image on the display.

12. The method of claim 11, wherein the at least one area includes a first area and a second area, and
wherein the method further comprises:
identifying the first area corresponding to an empty space of the first position, based on the movement of the cropped portion; and
identifying the second area designated between the first position and the second position to modify the object corresponding to the cropped portion, based on the movement of the cropped portion.

13. The method of claim 11 or claim 12, further comprising, when the first position of the cropped portion is contacted with an edge of the first image and the cropped portion is moved from the first position to the second position, designating the second area between the edge and the second position to modify the object corresponding to the cropped portion by filling a part of the object shape corresponding to the cropped portion.

14. The method of any one of claims 11 to 13, wherein the AI model includes a first AI model stored in the memory of the electronic device, and
wherein the method further comprises:
inputting the second image and the mask information to the first AI model; and
obtaining the third image generated through inpainting of the at least one area of the second image by the first AI model, based on the second image and the mask information.

15. A non-transitory storage medium storing instructions that, when executed by an electronic device (101, 201), cause the electronic device to perform at least one operation, wherein the at least one operation comprises:
displaying a first image through a user interface on a display (160, 260);
obtaining a second image by cropping a portion of the first image corresponding to an object and moving the cropped portion from a first position to a second position with respect to the first image through the user interface;
obtaining mask information indicating at least one area of the second image to be modified by inpainting, based on the first position of the cropped portion and the second position of the cropped portion;
applying the second image and the mask information to an AI model;
obtaining a third image generated based on the second image and the mask information by the AI model; and
displaying the third image on the display.
